(19) Europäisches Patentamt
European Patent Office
Office européen des brevets

(11) Numéro de publication : **0 522 901 A1**

# (12) DEMANDE DE BREVET EUROPEEN

(21) Numéro de dépôt : **92401702.3**

(22) Date de dépôt : **18.06.92**

(51) Int. Cl.[5] : **H01B 1/12,** C09D 5/24

(30) Priorité : **02.07.91 FR 9108228**

(43) Date de publication de la demande :
**13.01.93 Bulletin 93/02**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Epron, Florence**
**THOMSON-CSF, SCPI, Cédex 67**
**F-92045 Paris la Défense (FR)**
Inventeur : **Henry, François**
**THOMSON-CSF, SCPI, Cédex 67**
**F-92045 Paris la Défense (FR)**
Inventeur : **Sagnes, Olivier**
**THOMSON-CSF, SCPI, Cédex 67**
**F-92045 Paris la Défense (FR)**
Inventeur : **Dubois, Jean-Claude**
**THOMSON-CSF, SCPI, Cédex 67**
**F-92045 Paris la Défense (FR)**

(74) Mandataire : **Guérin, Michel et al**
**THOMSON-CSF SCPI B.P. 329**
**F-92402 COURBEVOIE CEDEX (FR)**

## (54) Matériaux conducteurs à base de polymère conducteur encapsulé.

(57) L'invention concerne des matériaux conducteurs à base de polymère conducteur (Po) encapsulé. L'encapsulation par une couronne de polymère (P1) permet de stabiliser la conductivité de ces matériaux, l'encapsulation peut être réalisée par une couronne de polymère filmogène donnant de très bonnes propriétés mécaniques au matériau ainsi formé, contrairement aux polymères conducteurs de l'art antérieur qui sans encapsulation génèrent des matériaux cassants et moins stables dans le temps.

Application : Peinture

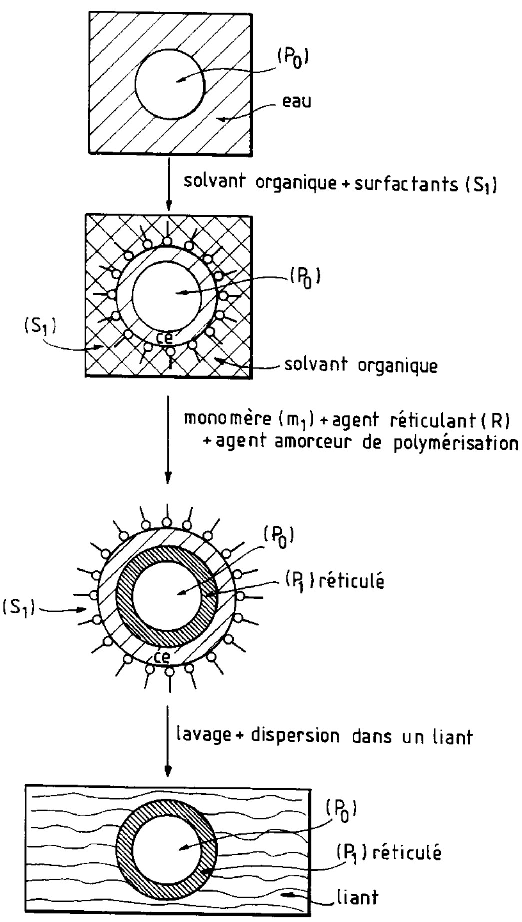


FIG. 1

EP 0 522 901 A1

Jouve, 18, rue Saint-Denis, 75001 PARIS

L'invention concerne des matériaux à base de polymère conducteur stabilisé par encapsulation ainsi que leur procédé d'obtention. Ces matériaux conducteurs, stables et facilement dispersables en solution sont à l'heure actuelle très recherchés dans le domaine des peintures et plus particulièrement dans le domaine des peintures absorbantes destinées au camouflage d'appareil et ce en raison des propriétés absorbantes des polymères conducteurs.

Jusqu'à ce jour, plusieurs voies de synthèse conduisent à l'obtention de polymères conducteurs.

La voie électrochimique a été la voie la plus étudiée qui a permis de synthétiser des polymères présentant de bonnes performances au niveau conductivité mais ce type de synthèse conduit nécessairement à l'obtention d'un film cassant de mauvaise tenue mécanique et dont l'épaisseur ne peut excéder une ou deux dizaines de microns. Les rendements et les quantités inhérentes à cette voie de synthèse rendent celles-ci difficiles à exploiter industriellement. Plus précisément, la voie électrochimique consiste en une électropolymérisation durant laquelle le polymère se développe sur une électrode et est rendu conducteur par l'insertion d'espèces ioniques stabilisant la conduction. Parallèlement à la voie électrochimique, il existe une voie de synthèse purement chimique utilisant une polymérisation oxydative permettant d'obtenir une poudre conductrice avec des tailles submicroniques (1 μm à 0,1 μm) et ce avec un excellent rendement.

Généralement, le protocole réactionnel met en présence un oxydant de type **$FeCl_3$, $Fe(NO_3)_3$, $Fe(SO_3C_6H_4CH_3)_3$** ou **$CuCl_2$** et le monomère. Le monomère oxydé se polymérise en courtes chaînes (20 à 50 unités monomère). Par exemple la synthèse du polypyrrole peut être initiée par le couple pyrrole, chlorure ferrique, la réaction d'oxydoréduction étant la suivante :

$$FeCl_3 \longrightarrow Fe^{3+} + 3Cl^-$$

$$Fe^{3+} + 1e \longrightarrow Fe^{2+}$$

et

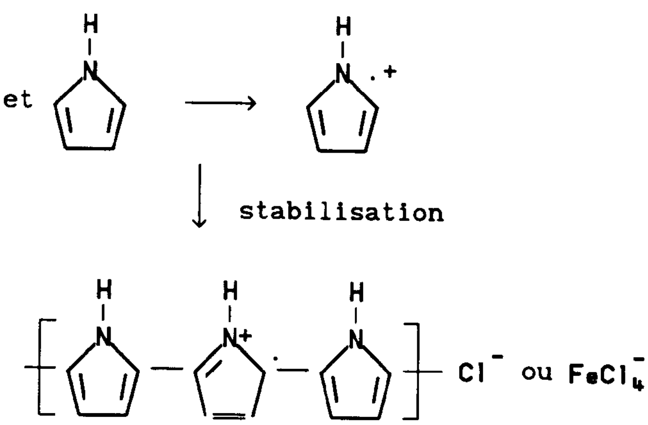


La charge + étant délocalisée.

L'ion **$Fe^{3+}$** joue le rôle d'oxydant et d'amorceur alors que l'ion $Cl^-$ ou l'ion **$FeCl_4^-$** joue le rôle de dopant (stabilisant la conductivité). Les conductivités obtenues par ce type de synthèse dépendent du milieu réactionnel ; l'eau et les milieux acides permettent d'obtenir les meilleurs rendements et de bonnes conductivités.

En outre, il est possible d'adjoindre à cette synthèse des sels codopants de tosylate de sodium ou d'ammonium quaternaires qui apportent un dopant plus stable et donc conduisent à un polymère plus stable thermiquement et chimiquement dont la conductivité est accrue.

Ce type de synthèse présente le grand Intérêt de fournir des poudres exploitables Industriellement, cependant la conductivité des polymères conducteurs obtenus par voie chimique nécessite d'être bien stabilisée.

Certains auteurs ont obtenu des latex de polypyrrole stabilisés de manière stérique par des polymères hydrosolubles tels que la méthylcellulose ou l'acétate polyvinylique partiellement hydrolysé ou bien encore stabilisés par répulsion électrostatique par adsorption de polymères contenant des groupes polaires tels que le sel de sodium de sulfonate de cellulose. Ces types de stabilisateurs permettent d'obtenir des particules de polypyrrole enrobées de surfactants entraînant une augmentation de la stabilité des particules. Néanmoins, cette enveloppe de surfactants reste perméable au milieu environnant, l'isolement de la particule par cette enveloppe n'est pas total, et ne contribue que partiellement à la stabilité de la particule.

C'est pourquoi la présente invention propose d'enrober les particules de polymère conducteur avec un polymère hydrosoluble réticulé, l'enrobage conduisant à la formation d'une coque dure parfaitement imperméable au milieu extérieur, les particules ainsi bien stabilisées sont de plus facilement dispersables dans tout liant conduisant à l'obtention d'un matériau filmogène. La présente invention a donc pour objet un matériau à base

de polymères conducteurs caractérisé en ce qu'il comporte des particules de polymère conducteur ($P_o$) chaque particule étant enrobée d'une couronne $C_1$ de polymère hydrosoluble réticulé ($P_1$). Le polymère ($P_o$) est de préférence un polymère de type polypyrrole ou de type polythiophene. Le polymère ($P_1$) peut être de type polyacrilamide. L'invention a aussi pour objet un procédé d'obtention du matériau conducteur comportant des particules de polymère conducteur ($P_o$) enrobées de polymère hydrosoluble réticulé ($P_1$), ce procédé étant caractérisé en ce qu'il comprend les étapes suivantes :

- Emulsification d'une solution aqueuse de particules de polymère conducteur ($P_o$) dans un mélange de solvant organique et de surfactant hydrophile ($S_1$) conduisant à la formation d'une particule ($P_o$) enrobée d'une couronne d'eau Ce, elle-même enrobée de surfactant hydrophile ($S_1$) dispersée dans le solvant organique.
- Polymérisation dans l'émulsion précédente, d'un monomère hydrophile et hydrosoluble ($m_1$) en présence d'un agent réticulant (R) conduisant à la formation de particules de polymère ($P_o$) chaque particule étant enrobée d'une couronne $C_1$ de polymère ($P_1$) hydrosoluble réticulé, ladite couronne $C_1$ étant insoluble.

L'invention a encore pour objet un matériau à base de polymère conducteur caractérisé en ce qu'il comporte des particules de polymère conducteur ($P_o$), chaque particule étant enrobée d'une couronne $C_1$ de polymère, hydrosoluble réticulé ($P_1$), ladite couronne étant entourée d'une couronne $C_2$ de polymère filmogène ($P_2$) cette dernière couronne étant enrobée de surfactants hydrophobes ($S_2$).

De tels matériaux possèdent des propriétés particulièrement Intéressantes ; en effet leur conductivité se trouve stabilisée par la couronne $C_1$ et Ils ont une très bonne tenue mécanique générée par la couronne filmogène $C_2$ qui permet d'utiliser directement ces matériaux sans avoir à les redisperser préalablement dans un agent liant. Le polymère $P_2$ peut être un copolymère styrène-acrylate de butyle, le surfactant ($S_2$) peut être un octyl phénol éthoxylé. La couronne de surfactants ($S_2$) permet de redisperser à volonté le matériau de l'invention, et d'empêcher l'aggrégation des couronnes ($C_2$) de polymère filmogène ($P_2$). La présence de surfactants dans le cas de particules ($P_o$) enrobées de couronne $C_1$ n'est pas nécessaire dans la mesure où les couronnes de polymère hydrosoluble réticulé n'ont pas tendance à s'agréger, de tels surfactants nuiraient même à la bonne dispersion dans un liant.

L'invention a enfin pour objet un procédé d'obtention d'un matériau conducteur comprenant des particules de polymère conducteur ($P_o$), chaque particule étant enrobée d'une couronne $C_1$ de polymère hydrosoluble réticulé ($P_1$) elle-même enrobée d'une couronne $C_2$ de polymère filmogène ($P_2$) enrobée de surfactants hydrophobes ($S_2$) caractérisé en ce qu'il comprend les étapes suivantes :

**ETAPE A :**

- Obtention dans un solvant organique de particules ($P_o$) enrobées de polymère ($P_1$), chaque particule étant entourée d'une couronne d'eau Ce elle-même entourée de surfactants hydrophiles ($S_1$).

**ETAPE B :**

- Inversion d'émulsion par l'ajout d'agents surfactants ($S_2$) en proportion plus élevée que les agents surfactants ($S_1$) afin d'obtenir des particules ($P_o$) enrobées d'une couronne $C_1$ elle-même enrobée d'une couronne de solvant organique $C_o$ enrobée de surfactants ($S_2$) le tout étant dispersé dans l'eau.

**ETAPE C :**

- Polymérisation en émulsion, de monomère hydrophobe ($m_2$) dans la couronne $C_o$ de solvant organique conduisant à l'obtention de particules de polymère ($P_o$), chaque particule étant enrobée d'une couronne $C_1$, elle-même enrobée d'une couronne $C_2$ de polymère ($P_2$) obtenu à partir des monomères ($m_2$) ladite couronne $C_2$ étant entourée de surfactants ($S_2$).

La présente invention sera mieux comprise et d'autres avantages apparaitront à la lecture de la description qui va suivre et des dessins annexés parmi lesquels :

- la figure 1 illustre le schéma réactionnel conduisant à l'élaboration d'un matériau conducteur filmogène à partir de particules de polymère conducteur ($P_o$) enrobées de polymère hydrosoluble réticulé ($P_1$), selon l'invention ;
- la figure 2 illustre le schéma réactionnel du procédé d'obtention d'un matériau conducteur filmogène selon l'invention, à partir d'une émulsion de particules de polymère ($P_o$) chaque particule étant enrobée d'une couronne $C_1$, elle-même enrobée d'une couronne d'eau Ce et de surfactants hydrophiles ($S_1$).

La présente invention propose l'élaboration de matériaux comprenant des particules de polymère conducteur très bien stabilisées grâce à la présence d'une couronne hermétique de polymère hydrosoluble réticulé ($P_1$). L'art antérieur n'avait jusqu'alors envisagé d'enrober les particules de polymère ($P_o$) qu'avec des agents surfactants de type méthylcellulose. Pour réaliser la coque dure $C_1$, l'invention part de telles particules préalablement stabilisées qui vont être encapsulées par un polymère hydrophile, hydrosoluble, différents travaux ayant montré que la nature des polymères conducteurs rendait extrêmement difficile l'encapsulation directe par un polymère hydrophobe.

Exemple d'obtention de matériau selon l'invention, utilisant des particules latex de polypyrrole.

Les particules de polypyrrole ont préalablement été stabilisées par la méthylcellulose et synthétisés en présence de **$FeCl_3$**. Les latex employés sont concentrés de façon à ce que le taux de solide soit compris entre 6 et 12% en poids. La suspension est soumise aux ultrasons de façon à éliminer au maximum les agglomérats qui auraient pu se former lors des centrifugations successives nécessaires au lavage des suspensions. Ensuite la suspension aqueuse est versée goutte à goutte dans un volume de milieu organique contenant un tensio actif hydrophile ($S_1$), le sorbitane monooléate. Le milieu organique choisi est le cyclohexane, de point d'ébullition inférieur à l'eau, il ne forme pas d'azéotrope ce qui rend son élimination facile. L'émulsification est effectuée grâce à une agitation vigoureuse de 24 000 trs/min. L'émulsion obtenue est versée dans un réacteur double enveloppe thermostabilisé muni d'un réfrigérant à boules, d'un thermomètre, d'une arrivée d'azote, et d'un agitateur mécanique à vitesse d'agitation parfaitement contrôlée. Le monomère $m_1$ utilisé pour l'encapsulation est hydrosoluble et hydrophile. L'acrylamide répond à ces critères, il doit être associé à un agent réticulant (R) afin d'obtenir un polymère ($P_1$) réticulé, insoluble dans l'eau. Cet agent peut être le N-N' méthylènebisacrylamide et doit être introduit en quantité suffisante pour éviter la formation d'un gel correspondant à un polymère partiellement réticulé.

Dans un premier temps, le monomère et le réticulant sont versés, sous forme de poudre, dans le réacteur contenant l'émulsion de polypyrrole, dans le milieu organique sous une agitation de 480 trs/min. Lorsque les monomères sont préalablement dissous dans de l'eau, avant leur introduction dans le réacteur, il y a formation d'une deuxième population de particules. C'est pourquoi l'acrylamide et le méthylènebisacrylamide sont utilisés sous forme de poudre. Dans ce cas, une infime partie de ces produits va se solubiliser dans le milieu organique, le reste ayant plutôt tendance à aller se dissoudre dans l'eau présente à la surface des particules. L'encapsulation se voit ainsi fortement favorisée. On introduit alors dans le réacteur un agent amorceur de polymérisation, soluble dans l'eau. Il peut s'agir de persulfate d'ammonium. La polymérisation est réalisée durant 2 heures à 45°C. On obtient ainsi des particules composites dont le coeur est formé de la particule de polypyrrole et dont la couronne est du polyacrilamide réticulée. La figure 1 illustre le procédé d'obtention de telles particules encapsulées. Ces particules lavées puis séchées peuvent alors être facilement dispersées dans un liant classique de type epoxy conduisant à l'élaboration d'un matériau à base de polymère conducteur, stable en conductivité et filmogène.

Parallèlement à la dispersion dans un liant, il est également possible avec les particules de polymère $P_o$ encapsulées par un polymère $P_1$ d'obtenir un matériau filmogène ne nécessitant pas d'être dispersé dans un liant. Pour cela les particules de polymère ($P_o$) encapsulées par ($P_1$) peuvent être enrobées d'une couronne $C_2$ de polymère filmogène ($P_2$).

En reprenant l'exemple des particules de polypyrrole enrobées de polyacrilamide entourée d'une couronne d'eau Ce, elle-même entourée de surfactants ($S_1$), le tout étant dispersé dans un solvant organique, on peut réaliser une nouvelle encapsulation de la couronne $C_1$ par une couronne $C_2$ de polymère filmogène ($P_2$).

Pour cela on réalise une inversion de phase, permettant de constituer une couronne de solvant organique $C_o$ autour de la couronne $C_1$, la polymérisation d'un monomère hydrosoluble ($m_2$) pouvant se faire dans ladite couronne $C_o$. Pour cela l'émulsion citée précédemment est versée goutte à goutte dans un volume double d'eau contenant 1,8% de tensio actif hydrophobe ($S_2$) pouvant être de l'octylphenol ethoxylé, sous une agitation de 24 000 trs/min. La phase organique non emprisonnée dans la couronne $C_o$ est éliminée par évaporation sous vide. La figure 2 schématise les étapes décrites du procédé.

L'émulsion inversée de polymère conducteur est diluée de façon à obtenir un taux de solide de 3% en masse, puis est versée dans un réacteur thermostabilisé muni d'un réfrigérant à boules, d'une arrivée d'azote, d'un thermomètre et d'un agitateur magnétique. Sous agitation de 600 trs/min, les monomères ($m_2$) ou les comonomères (si l'on envisage un copolymère ($P_2$)) sont introduits dans le réacteur. Ces monomères sont Insolubles dans l'eau et très hydrophobes. Ils peuvent être polymérisés selon les méthodes classiques de polymérisation en émulsion pour former des dispersions colloïdales stables de polymères insolubles dans l'eau. Voici un exemple de monomères styrène et acrylate de butyle en pourcentage équimolaire de façon à obtenir un copolymère filmogène ($P_2$) à température ambiante. Les monomères ($m_2$) peuvent être choisis de façon à adapter les propriétés chimiques et physiques de la couronne $C_2$ et du matériau filmogène en résultant. Il est possible d'ajouter un copolymère fonctionnel ($P_3$) chargé, de façon à créer des charges de surface permettant de renforcer la stabilité thermodynamique apportée par les tension actifs, ce copolymère ($P_3$) peut être un sel de potassium du sulfoproplméthacrylate. Les proportions des monomères hydrophobes par rapport au polymère conducteur peuvent varier dans une gamme de 30 à 100 % en masse.

Après introduction des monomères dans le réacteur, l'émulsion est chauffée à 60°C et mise sous atmosphère d'azote. Au bout d'une heure, on ajoute l'amorceur pouvant être le persulfate d'ammonium **$[(NH_4)_2SO_8]$** soluble dans l'eau. La réaction est effectuée à 60°C, sous azote, à une vitesse d'agitation de 380 trs/min, pendant 15 heures. On obtient un latex noir très stable (durée supérieure à un an) de polydispersité comprise entre 400 et 1000 nm. Les particules de polymère ($P_o$) enrobées d'une couronne $C_1$ elle-même enrobée de surfactants ($S_2$) sont parfaitement stables au niveau conductivité en milieu aqueux et permettent l'obtention de matériaux filmogènes.

En effet des films peuvent être obtenus en déposant les latex dans un moule et en laissant s'évaporer lentement à température ambiante l'eau présente dans le milieu.

Ces latex peuvent être utilisés en tant que peinture ; ils présentent également le grand intérêt de pouvoir être déposés par électrophorèse, on obtient dans ce cas un revêtement conducteur stable et filmogène sur tout support métallique pouvant avoir une surface très complexe, alors qu'une peinture classique déposée en film ne peut assurer la même qualité de recouvrement.

Les conductivités $\sigma$ de films selon l'invention, d'épaisseur 1 mm ont été évaluées dans la gamme des hyperfréquences en mesurant la constante diélectrique $\varepsilon''$ relative aux pertes du film. Comme $\sigma = \omega \varepsilon o \varepsilon''$, $\omega$ étant la fréquence de mesure, nous obtenons les résultats suivants récapitulés dans le tableau 1.

| $\omega$ (Gigahertz) | $\varepsilon''$ | $\sigma$ ($10^{-3}$ s/cm) |
|---|---|---|
| 3 | 5,3 | 8,8 |
| 9,5 | 4,2 | 22 |
| 17 | 4,1 | 38 |

Au vue de ces propriétés diélectriques, ces matériaux apparaissent être de bons candidats pour la réalisation de matériaux absorbants électromagnétiques ou à propriété antistatique.

## Revendications

1. Matériau à base de polymère conducteur caractérisé en ce qu'il comporte des particules de polymère conducteur ($P_o$), chaque particule étant enrobée d'une couronne $C_1$ de polymère hydrosoluble réticulé ($P_1$).

2. Matériau selon la revendication 1, caractérisé en ce que le polymère conducteur ($P_o$) est de type polypyrrole ou de type polythiophene.

3. Matériau selon l'une des revendications 1 et 2, caractérisé en ce que le polymère ($P_1$) est un polyacrylamide.

4. Matériau selon la revendication 3, caractérisé en ce que le polyacrylamide est réticulé par le N-N′ méthylène-bisacrylamide.

5. Procédé d'obtention de matériau conducteur comportant des particules de polymère conducteur ($P_o$), chaque particule étant enrobée d'une couronne de polymère hydrosoluble réticulé ($P_1$) caractérisé en ce qu'il comprend les étapes suivantes :
   - Emulsification d'une solution aqueuse de particules de polymère conducteur ($P_o$) dans un mélange de solvant organique et de surfactant hydrophile ($S_1$) conduisant à la formation de particules de polymère ($P_o$), chaque particule étant enrobée d'une couronne d'eau Ce, elle-même enrobée de surfactant hydrophile ($S_1$), lesdites particules étant dispersées dans le solvant organique.
   - Polymérisation dans l'émulsion précédente, d'un monomère hydrophile et hydrosoluble ($m_1$) en présence d'un agent réticulant (R) conduisant à la formation de particules de polymère ($P_o$) chaque particule étant enrobée d'une couronne $C_1$ de polymère ($P_1$) hydrosoluble réticulé, ladite couronne $C_1$ est insoluble.

6. Procédé selon la revendication 5, caractérisé en ce que le surfactant ($S_1$) est du sorbitane monooléate.

7. Matériau selon l'une des revendications 1 à 3, caractérisé en ce que la couronne $C_1$ de polymère hydrosoluble réticulé est elle-même enrobée d'une couronne $C_2$ de polymère filmogène ($P_2$), ladite couronne $C_2$ étant entourée de surfactants hydrophobes ( $S_2$ ).

**8.** Matériau selon la revendication 7, caractérisé en ce que le polymère ($P_2$) est un copolymère styrène-acrylate de butyle.

**9.** Matériau selon l'une des revendications 7 et 8, caractérisé en ce que le surfactant ($S_2$) est un octylphénoéthoxylé.

**10.** Procédé d'obtention d'un matériau conducteur comportant des particules de polymère conducteur ($P_o$), chaque particule étant enrobée d'une couronne $C_1$ de polymère hydrosoluble ($P_1$), elle-même enrobée d'une couronne $C_2$ de polymère filmogène ($P_2$) entourée de surfactants hydrophobes ($S_2$) caractérisé en ce qu'il comprend les étapes suivantes :

**ETAPE A :**

- Obtention dans un solvant organique de particules ($P_o$) enrobées de polymère ($P_1$), chaque particule étant entourée d'une couronne d'eau Ce elle-même entourée de surfactants hydrophiles ($S_1$).

**ETAPE B :**

- Inversion d'émulsion par l'ajout d'agents surfactants ($S_2$) en proportion plus élevée que les agents surfactants ($S_1$) afin d'obtenir des particules de polymère ($P_o$) enrobées d'une couronne $C_1$ elle-même enrobée d'une couronne de solvant organique $C_o$ enrobée de surfactants ($S_2$) le tout étant dispersé dans l'eau.

**ETAPE C :**

- Polymérisation en émulsion, de monomère hydrophobe ($m_2$) dans la couronne $C_o$ de solvant organique conduisant à l'obtention de particules de polymère ($P_o$), chaque particule étant enrobée d'une couronne $C_1$, elle-même enrobée d'une couronne $C_2$ de polymère ($P_2$) obtenu à partir des monomères ($m_2$) ladite couronne $C_2$ étant entourée de surfactants ($S_2$).

**11.** Procédé d'obtention d'un matériau conducteur selon la revendication 9, caractérisé en ce que l'étape A comprend les étapes suivantes :

- Emulsification d'une solution aqueuse de particules de polymère conducteur ($P_o$) dans un mélange de solvant organique et de surfactant hydrophile ($S_1$).
- Polymérisation dans l'émulsion précédente d'un monomère hydrophile et hydrosoluble ($m_1$) en présence d'un agent réticulant (R) conduisant à la formation de particules de polymère ($P_o$), chaque particule étant enrobée d'une couronne $C_1$ de polymère ($P_1$) réticulé et Insoluble

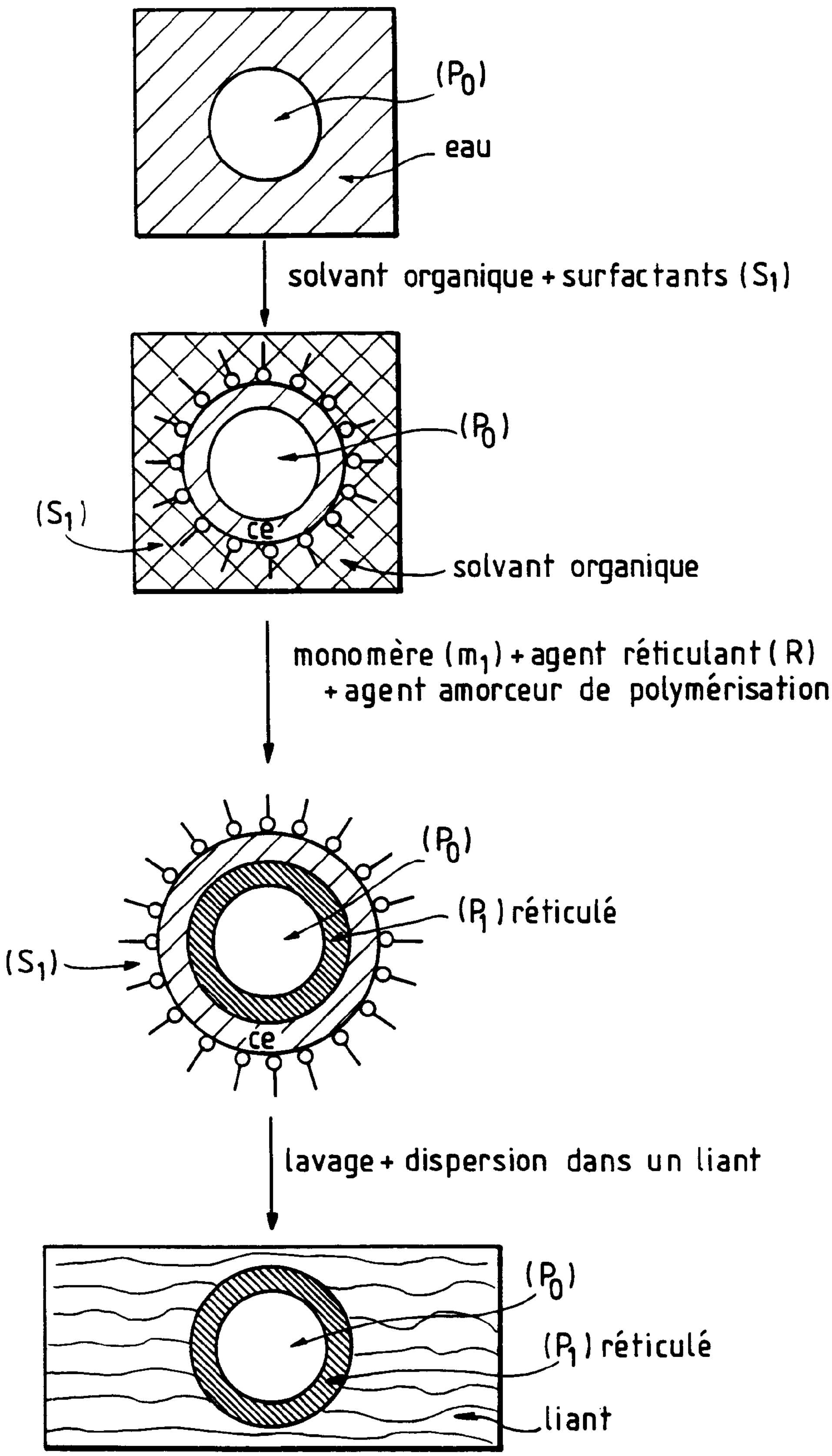

(P0)
eau
solvant organique + surfactants (S1)
(P0)
(S1)
ce
solvant organique
monomère (m1) + agent réticulant (R)
+ agent amorceur de polymérisation
(P0)
(P1) réticulé
(S1)
ce
lavage + dispersion dans un liant
(P0)
(P1) réticulé
liant


FIG. 1

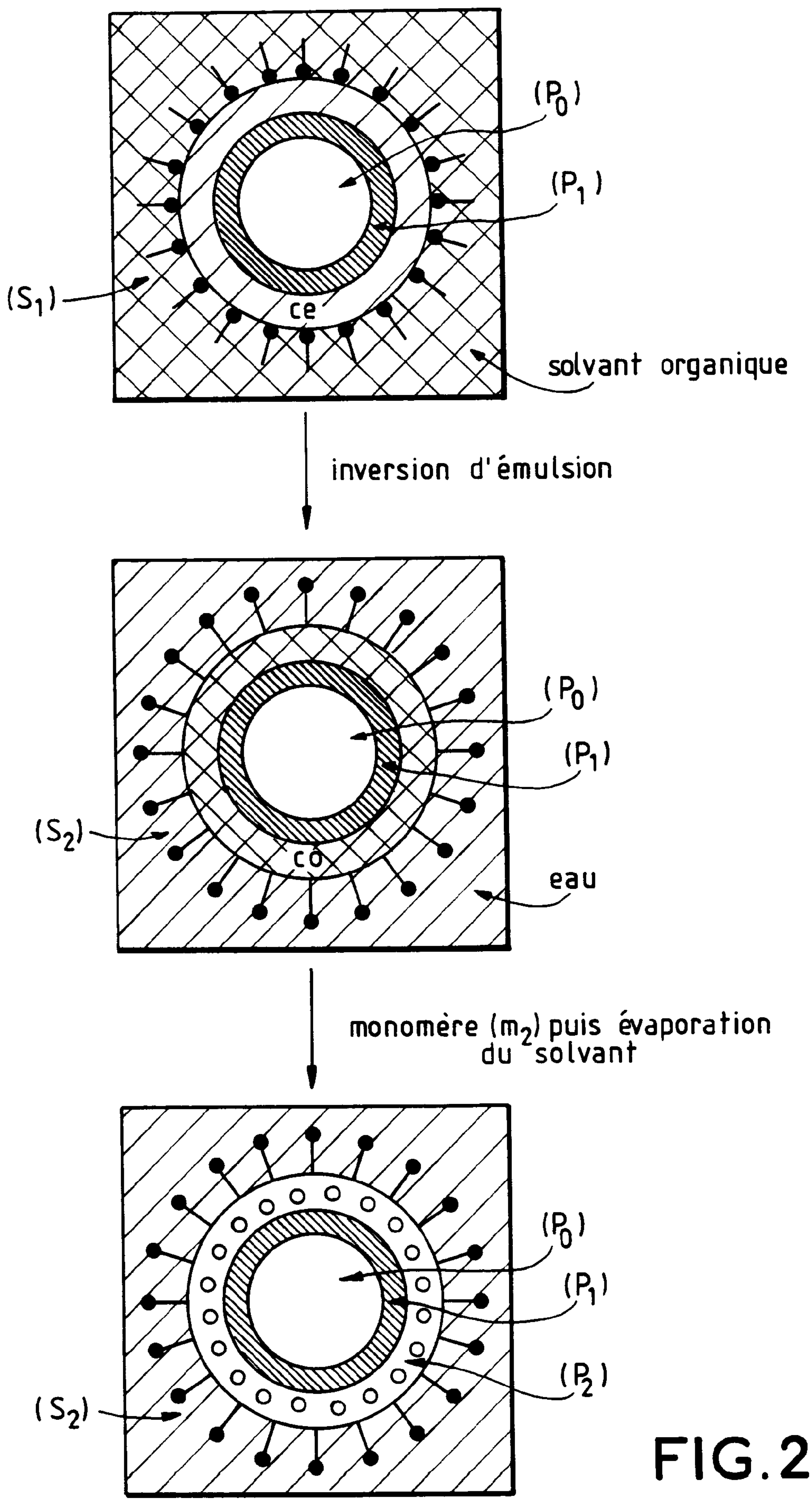
(P0)
(P1)
(S1)
ce
solvant organique
inversion d'émulsion
(P0)
(P1)
(S2)
co
eau
monomère (m2) puis évaporation du solvant
(P0)
(P1)
(P2)
(S2)

FIG.2

Office européen des brevets

# RAPPORT DE RECHERCHE EUROPEENNE

Numero de la demande

EP 92 40 1702

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | JOURNAL OF PHYSICS D. APPLIED PHYSICS. vol. 22, 14 Novembre 1989, LETCHWORTH GB pages 1580 - 1585 E.C.COOPER, B.VINCENT 'Electrically conducting organic films and beads based on conductive latex particles' * 1. Introduction; 2.4 et 2.5 * | 1,2,5 | H01B1/12 C09D5/24 |
| A | EP-A-0 124 848 (BASF AKTIENGESELLSCHAFT) * le document en entier * | 1,2,5 | |
| A | US-A-4 959 162 (S.P.ARMES, M.ALDISSI) * colonne 1, ligne 11 - colonne 3, ligne 61 * * revendications 1,2,8,9 * | 1,2,5 | |

| DOMAINES TECHNIQUES RECHERCHES (Int. Cl.5 ) |
|---|
| H01B |
| B01J |
| C09D |

Le présent rapport a été établi pour toutes les revendications

| Lieu de la recherche | Date d'achèvement de la recherche | Examinateur |
|---|---|---|
| LA HAYE | 25 SEPTEMBRE 1992 | VAN DER POEL W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)